# EUROPÄISCHE PATENTSCHRIFT

(11) **EP 3 854 494 B1**
(45) Veröffentlichungstag und Bekanntmachung des Hinweises auf die Patenterteilung: **28.09.2022**
(21) Anmeldenummer: 20153523.4
(22) Anmeldetag: 24.01.2020
(51) Int. Cl.: B21B 37/28

(54) **FREQUENZABHÄNGIGE VERTEILUNG VON STELLGRÖSSEN ZUR VERÄNDERUNG DES WALZGUTQUERSCHNITTS IN EINER WALZSTRASSE**
FREQUENCY-DEPENDENT DISTRIBUTION OF MANIPULATED VARIABLES FOR CHANGING THE ROLLED STRIP CROSS SECTION IN A ROLLING MILL
RÉPARTITION DÉPENDANTE DE LA FRÉQUENCE DES GRANDEURS DE RÉGLAGE PERMETTANT DE CHANGER LA SECTION TRANSVERSALE DE PRODUIT LAMINÉ DANS UN LAMINOIR

(43) Veröffentlichungstag der Anmeldung: 28.07.2021
(73) Patentinhaber: Primetals Technologies Germany GmbH, 91058 Erlangen (DE)
(72) Erfinder: LOEHE, Klaus, 90768 Fürth (DE)
(74) Vertreter: Metals@Linz

(56) Entgegenhaltungen:
- DE-A1- 3 823 767
- DE-A1-102015 223 600

## Beschreibung

### Gebiet der Technik

Die vorliegende Erfindung geht aus von einem Betriebsverfahren für eine Walzstraße zum Walzen eines Walzguts aus Metall,
- wobei die Walzstraße mehrere Walzgerüste aufweist, die von dem Walzgut in einer für die Walzgerüste einheitlichen Transportrichtung nacheinander durchlaufen werden, so dass das Walzgut in den Walzgerüsten nacheinander gewalzt wird,
- wobei eine Steuereinrichtung der Walzstraße aufgrund einer für die Änderung des Querschnitts, mit dem das Walzgut aus einem bestimmten Walzgerüst der Walzstraße auslaufen soll, charakteristischen Größe für dieses Walzgerüst und eine Anzahl von diesem Walzgerüst in Transportrichtung gesehen vorgeordneten Walzgerüsten der Walzstraße zunächst eine jeweilige vorläufige Stellgröße und unter Verwertung der jeweiligen vorläufigen Stellgröße eine jeweilige endgültige Stellgröße ermittelt,
- wobei die jeweilige endgültige Stellgröße den Querschnitt beeinflusst, mit dem das Walzgut aus dem jeweiligen Walzgerüst der Walzstraße ausläuft,
- wobei die Steuereinrichtung die Walzgerüste entsprechend der jeweiligen endgültigen Stellgröße ansteuert.

Die vorliegende Erfindung geht weiterhin aus von einem Steuerprogramm, wobei das Steuerprogramm Programmcode umfasst, der von einer Steuereinrichtung für eine Walzstraße mit mehreren Walzgerüsten abarbeitbar ist, wobei die Abarbeitung des Programmcodes bewirkt, dass die Steuereinrichtung die Walzstraße gemäß einem derartigen Betriebsverfahren steuert.

Die vorliegende Erfindung geht weiterhin aus von einer Steuereinrichtung für eine Walzstraße zum Walzen eines Walzguts aus Metall, wobei die Walzstraße mehrere Walzgerüste aufweist, die von dem Walzgut in einer für die Walzgerüste einheitlichen Transportrichtung nacheinander durchlaufen werden, so dass das Walzgut in den Walzgerüsten nacheinander gewalzt wird,
- wobei die Steuereinrichtung Ermittlungspfade aufweist, mittels derer die Steuereinrichtung aufgrund einer für die Änderung des Querschnitts, mit dem das Walzgut aus einem bestimmten Walzgerüst der Walzstraße auslaufen soll, charakteristischen Größe für dieses Walzgerüst und eine Anzahl von diesem Walzgerüst in Transportrichtung gesehen vorgeordneten Walzgerüsten der Walzstraße zunächst eine jeweilige vorläufige Stellgröße und unter Verwertung der jeweiligen vorläufigen Stellgröße eine jeweilige endgültige Stellgröße ermittelt,
- wobei die jeweilige endgültige Stellgröße den Querschnitt beeinflusst, mit dem das Walzgut aus dem jeweiligen Walzgerüst der Walzstraße ausläuft,
- wobei die Steuereinrichtung die Walzgerüste entsprechend der jeweiligen endgültigen Stellgröße ansteuert.

Die vorliegende Erfindung geht weiterhin aus von einer Walzstraße für ein flaches Walzgut,
- wobei die Walzstraße mehrere Walzgerüste aufweist, die von dem Walzgut in einer für die Walzgerüste einheitlichen Transportrichtung nacheinander durchlaufen werden, so dass das Walzgut in den Walzgerüsten der Walzstraße nacheinander gewalzt wird,
- wobei die Walzstraße eine Steuereinrichtung aufweist, von der die Walzgerüste der Walzstraße gesteuert werden.

### Stand der Technik

Walzgüter aus Metall - insbesondere Metallbänder - werden oftmals in mehrgerüstigen Walzstraßen gewalzt. Insbesondere beim Walzen von Metallband sind das Einhalten einer vorgegebenen Kontur und das Einhalten einer vorgegebenen Planheit von großer Bedeutung. Kontur und Planheit sind in der Regel nicht unabhängig voneinander beeinflussbar. Insbesondere werden sie maßgeblich durch die Form des Walzspaltes vor einem Messort bestimmt.

Um die Kontur und die Planheit einzuhalten, sind entsprechende Regelungen für die Kontur und die Planheit (oder das Profil und die Planheit) bekannt. Die Regelungen können beispielsweise auf die Walzenbiegung, die Walzenschwenkung, die Walzenverschiebung und/oder die Walzenkühlung eines bestimmten Walzgerüsts wirken.

Wird durch diese Regelungen ein Steuereingriff vorgenommen, also eine Änderung des Walzspaltverlaufs, so ändert sich die Kontur, mit welcher das Metallband aus dem bestimmten Walzgerüst ausläuft. Die Kontur, mit welcher das Metallband aus dem bestimmten Walzgerüst ausläuft, ist zugleich auch die Kontur, mit welcher das Metallband in das nachfolgende Walzgerüst einläuft. Somit ändert sich die Planheit des Metallbandes hinter dem nachfolgenden Walzgerüst, es sei denn, dass auch der Walzspaltverlauf des nachfolgenden Walzgerüsts entsprechend geändert wird.

Ein analoger Sachverhalt gilt auch in die andere Richtung. Wird durch ein entsprechendes Verstellen des Walzspaltes eines bestimmten Walzgerüsts die Kontur des Metallbandes hinter diesem Walzgerüst geändert, ändert sich auch die Planheit hinter diesem Walzgerüst, es sei denn, man passt auch das vorhergehende Walzgerüst entsprechend an.

Will man also die Konturgröße des Walzguts hinter einem bestimmten Walzgerüst der Walzstraße verstellen (beispielsweise hinter dem letzten Walzgerüst der Walzstraße), so muss zumindest dieses Walzgerüst verstellt werden. In der älteren, am Anmeldetag der vorliegenden Erfindung noch nicht veröffentlichten europäischen Patentanmeldung 18 198 437.8 (Anmeldetag 03.10.2018) ist ein Betriebsverfahren für eine Walzstraße mit mehreren Walzgerüsten beschrieben, bei welchem zusätzlich auch das Walzgerüst vor dem bestimmten Walzgerüst verstellt wird, so dass sowohl die Kontur des Metallbandes als auch das Profil des Metallbandes mit möglichst hoher Dynamik auf ihre jeweiligen Zielgrößen geregelt werden können. Damit verschiebt sich der Planheitsfehler in den Zwischengerüstbereich zwischen dem bestimmten Walzgerüst und dem diesem vorgeordneten Walzgerüst.

Um einen Planheitsfehler in diesem Zwischengerüstbereich zu vermeiden, kann man auch die Kontur in weiter vorgeordneten Walzgerüsten verstellen und die Gerüste entsprechend anpassen. Dadurch wird der Planheitsfehler immer weiter in den vorderen Bereich der Walzstraße verschoben. Beim Walzen in den vorderen Walzgerüsten der Walzstraße ist das Metallband jedoch oftmals noch so dick, dass beim Walzen ein Materialquerfluss stattfindet und demzufolge keine Planheitsfehler auftreten. Die Dynamik der Regelung ist aber von der Transportzeit des Metallbandes abhängig, die vom ersten beteiligten Walzgerüst bis zum Messort vergeht. Aufgrund der großen Distanz und der hiermit einhergehenden großen Transportzeit kann die Kontur im Stand der Technik in einer größeren Walzstraße mit beispielsweise sieben Walzgerüsten nicht schnell und zielgenau eingestellt werden.

### Zusammenfassung der Erfindung

Die Aufgabe der vorliegenden Erfindung besteht darin, Möglichkeiten zu schaffen, mittels derer die Kontur des Walzguts mit einer hohen Dynamik eingestellt werden kann, wobei gleichzeitig Planheitsfehler in Zwischengerüstbereichen so weit wie möglich vermieden werden.

Die Aufgabe wird durch ein Betriebsverfahren für eine Walzstraße mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren für eine Walzstraße der eingangs genannten Art dadurch ausgestaltet,
- dass die Steuereinrichtung die jeweilige vorläufige Stellgröße für die vorgeordneten Walzgerüste durch eine jeweilige Frequenzfilterung der charakteristischen Größe oder einer aus der charakteristischen Größe ermittelten jeweiligen Zwischengröße ermittelt,
- dass die Frequenzfilterungen derart ausgestaltet sind, dass in die Ermittlung der jeweiligen vorläufigen Stellgröße für die vorgeordneten Walzgerüste jeweils nur Frequenzanteile der charakteristischen Größe eingehen, die unter einer jeweiligen Grenzfrequenz liegen, und
- dass, bezogen auf die Anzahl von dem bestimmten Walzgerüst in Transportrichtung gesehen vorgeordneten Walzgerüsten der Walzstraße und in Transportrichtung gesehen, die Grenzfrequenz von Walzgerüst zu Walzgerüst jeweils gleichbleibt oder zunimmt.

Im Rahmen der vorliegenden Erfindung erfolgt also eine Frequenzaufteilung von Änderungen der Kontur. Schnelle Änderungen der Kontur werden in den hinteren Walzgerüsten der Walzstraße mit hoher Dynamik ausgeglichen, während langsame Änderungen der Kontur auf vordere Walzgerüste der Walzstraße verlagert werden. Die Verlagerung erfolgt dabei umso weiter nach vorne, je langsamer die Änderungen der Kontur sind. Dadurch wird im Ergebnis eine hohe Dynamik der Regelung erreicht, wobei gleichzeitig der Planheitsfehler in den Zwischengerüstbereichen zwischen den Walzgerüsten der Walzstraße klein gehalten wird. Weiterhin werden die hinteren Walzgerüste entlastet.

Die Steuereinrichtung ermittelt in der Regel die vorläufige Stellgröße für das bestimmte Walzgerüst der Walzstraße anhand der charakteristischen Größe, insbesondere durch eine Frequenzfilterung der charakteristischen Größe. Für die vorgeordneten Walzgerüste ist die Ermittlung stets eine Frequenzfilterung. Hierbei ist es möglich, dass die Steuereinrichtung die vorläufigen Stellgrößen für die vorgeordneten Walzgerüste durch eine Frequenzfilterung der charakteristischen Größe ermittelt. Vorzugsweise ermittelt die Steuereinrichtung die vorläufigen Stellgrößen für die vorgeordneten Walzgerüste jedoch durch eine Frequenzfilterung der jeweiligen Zwischengröße. Die jeweilige Zwischengröße ermittelt die Steuereinrichtung in diesem Fall vorzugsweise anhand der endgültigen Stellgröße für das in Transportrichtung gesehen jeweils unmittelbar nachgeordnete Walzgerüst. Die Ermittlung anhand der jeweiligen Zwischengröße weist insbesondere den Vorteil auf, dass die Filterungen einfacher parametriert werden können. Weiterhin fallen in der Regel verbleibende, nicht vermeidbare Unplanheiten des Metallbandes in den Zwischengerüstbereichen kleiner aus als bei einer Ermittlung anhand der charakteristischen Größe selbst.

Vorzugsweise ermittelt die Steuereinrichtung die jeweilige endgültige Stellgröße für ein jeweiliges Walzgerüst anhand der vorläufigen Stellgröße für das jeweilige Walzgerüst und einer jeweiligen Korrekturgröße. Hierbei ermittelt die Steuereinrichtung die jeweilige Korrekturgröße anhand der vorläufigen Stellgröße des in Transportrichtung gesehen jeweils unmittelbar vorgeordneten Walzgerüsts. Dadurch kann bei der Ansteuerung des jeweiligen Walzgerüsts diejenige Änderung der Kontur berücksichtigt werden, welche bereits durch das vorgeordneten Walzgerüst bzw. die vorgeordneten Walzgerüste bewirkt ist.

Vorzugsweise verzögert die Steuereinrichtung die jeweilige Korrekturgröße gegenüber der vorläufigen Stellgröße des in Transportrichtung gesehen unmittelbar vorgeordneten Walzgerüsts um eine jeweilige Verzögerungszeit. Dadurch kann ein zeitlich koordiniertes Aufschalten der jeweiligen Korrekturgröße auf die korrespondierende vorläufige Stellgröße erfolgen.

Vorzugsweise begrenzt die Steuereinrichtung die endgültigen Stellgrößen mittels eines jeweiligen Begrenzungselements. Dadurch können insbesondere Stellgrenzen von Aktuatoren berücksichtigt werden.

Die Aufgabe wird weiterhin durch ein Steuerprogramm mit den Merkmalen des Anspruchs 6 gelöst. Erfindungsgemäß bewirkt die Abarbeitung des Programmcodes, dass die Steuereinrichtung die Walzstraße gemäß einem erfindungsgemäßen Betriebsverfahren steuert.

Die Aufgabe wird durch eine Steuereinrichtung für eine Walzstraße mit den Merkmalen des Anspruchs 7 gelöst. Vorteilhafte Ausgestaltungen der Steuereinrichtung sind Gegenstand der abhängigen Ansprüche 8 bis 12.

Erfindungsgemäß wird eine Steuereinrichtung für eine Walzstraße der eingangs genannten Art dadurch ausgestaltet,
- dass die Ermittlungspfade der vorgeordneten Walzgerüste Frequenzfilter aufweisen, mittels derer die Steuereinrichtung die jeweilige vorläufige Stellgröße für die vorgeordneten Walzgerüste durch eine jeweilige Frequenzfilterung der charakteristischen Größe oder einer aus der charakteristischen Größe ermittelten jeweiligen Zwischengröße ermittelt,
- dass die Frequenzfilter derart ausgebildet sind, dass in die Ermittlung der jeweiligen vorläufigen Stellgröße für die vorgeordneten Walzgerüste jeweils nur Frequenzanteile der charakteristischen Größe eingehen, die unter einer jeweiligen Grenzfrequenz liegen, und
- dass, bezogen auf die Anzahl von dem bestimmten Walzgerüst in Transportrichtung gesehen vorgeordneten Walzgerüsten der Walzstraße und in Transportrichtung gesehen, die Grenzfrequenz von Walzgerüst zu Walzgerüst jeweils gleichbleibt oder zunimmt und
- dass der Ermittlungspfad für das bestimmte Walzgerüst derart ausgebildet ist, dass in die Ermittlung der vorläufigen Stellgröße für das bestimmte Walzgerüst zumindest diejenigen Frequenzanteile der charakteristischen Größe eingehen, die oberhalb der Grenzfrequenz des dem bestimmten Walzgerüst in Transportrichtung gesehen unmittelbar vorgeordneten Walzgerüsts liegen.

Analog zum Betriebsverfahren erfolgt also eine Frequenzaufteilung von Änderungen der Kontur, so dass schnelle Änderungen der Kontur in den hinteren Walzgerüsten der Walzstraße mit hoher Dynamik ausgeglichen werden, während langsame Änderungen der Kontur auf vordere Walzgerüste der Walzstraße verlagert werden.

Vorzugsweise führt die Steuereinrichtung dem Ermittlungspfad für das bestimmte Walzgerüst der Walzstraße die charakteristische Größe zu. Weiterhin weist die Steuereinrichtung vorzugsweise Zwischenblöcke auf, mittels derer die Steuereinrichtung für die vorgeordneten Walzgerüste die jeweilige Zwischengröße anhand der endgültigen Stellgröße für das in Transportrichtung gesehen jeweils unmittelbar nachgeordnete Walzgerüst ermittelt. Dadurch wird eine hohe Dynamik der Regelung erreicht. Weiterhin wird der Planheitsfehler in den Zwischengerüstbereichen zwischen den Walzgerüsten der Walzstraße klein gehalten. Schließlich werden die hinteren Walzgerüste entlastet.

Vorzugsweise weisen die Ermittlungspfade Knotenpunkte auf, in denen die Steuereinrichtung die jeweilige endgültige Stellgröße durch Addition der jeweiligen vorläufigen Stellgröße für das jeweilige Walzgerüst und einer jeweiligen Korrekturgröße ermittelt. In diesem Fall weist die Steuereinrichtung weiterhin Brückenelemente auf, mittels derer die Steuereinrichtung die jeweilige Korrekturgröße anhand der endgültigen Stellgröße des in Transportrichtung gesehen jeweils unmittelbar vorgeordneten Walzgerüsts ermittelt. Dadurch kann bei der Ansteuerung des jeweiligen Walzgerüsts diejenige Änderung der Kontur berücksichtigt werden, welche bereits durch das vorgeordneten Walzgerüst bzw. die vorgeordneten Walzgerüste bewirkt ist.

Vorzugsweise weisen die Brückenelemente Verzögerungsglieder auf, mittels derer die Steuereinrichtung die jeweilige Korrekturgröße gegenüber der endgültigen Stellgröße des in Transportrichtung gesehen unmittelbar vorgeordneten Walzgerüsts um eine jeweilige Verzögerungszeit verzögert. Dadurch kann ein zeitlich koordiniertes Aufschalten der jeweiligen Korrekturgröße auf die korrespondierende vorläufige Stellgröße erfolgen.

Vorzugsweise weisen die Ermittlungspfade ein jeweiliges Begrenzungselement auf, mittels dessen die Steuereinrichtung die jeweilige endgültige Stellgröße begrenzt. Dadurch können insbesondere Stellgrenzen von Aktuatoren berücksichtigt werden.

Entsprechend der Realisierung der Erfindung durch ein Steuerprogramm ist die Steuereinrichtung vorzugsweise als softwareprogrammierbare Einrichtung ausgebildet.

Die Aufgabe wird weiterhin durch eine Walzstraße mit den Merkmalen des Anspruchs 13 gelöst. Erfindungsgemäß ist bei einer Walzstraße der eingangs genannten Art die Steuereinrichtung als erfindungsgemäße Steuereinrichtung ausgebildet.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Walzstraße zum Walzen eines flachen Walzguts,
- FIG 2: hintere Walzgerüste einer Walzstraße,
- FIG 3: mehrere Walzgerüste einer Walzstraße und eine zugehörige Steuerung,
- FIG 4: mehrere Walzgerüste einer Walzstraße und eine alternative zugehörige Steuerung,
- FIG 5: eine Modifikation von FIG 3,
- FIG 6: eine Modifikation von FIG 4 und
- FIG 7: einen Ermittlungspfad.

### Beschreibung der Ausführungsformen

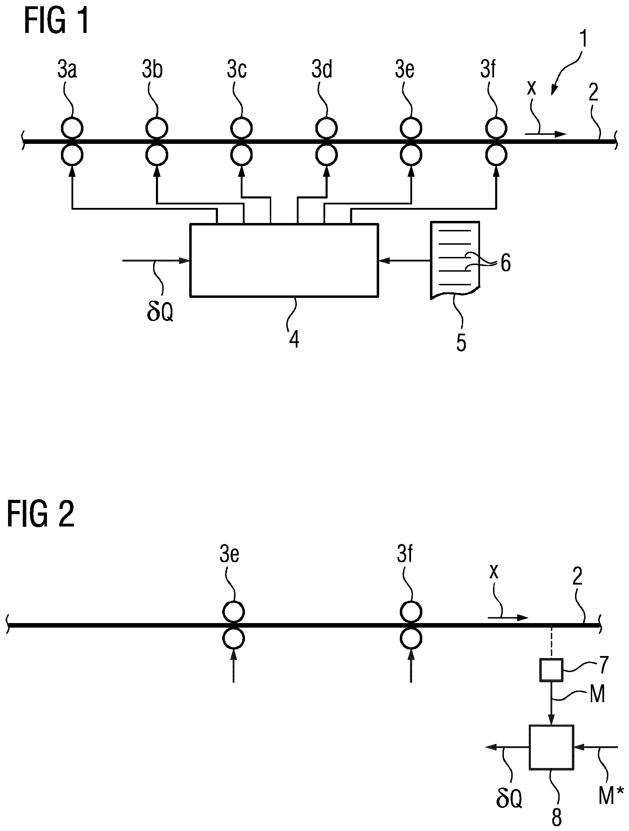

Gemäß FIG 1 wird in einer Walzstraße 1 ein langgestrecktes Walzgut 2 gewalzt. Das Walzgut 2 ist in der Regel ein flaches Walzgut, insbesondere ein Band. In Einzelfällen kann es sich jedoch auch um ein andersartiges langgestrecktes Walzgut handeln, beispielsweise um ein Profil. Das Profil kann beispielsweise ein I-Profil, ein H-Profil, ein T-Profil usw. sein. Das Material des Walzguts 2 ist in der Regel Stahl, in manchen Fällen Aluminium. In Einzelfällen kann sich aber auch um ein Walzgut 2 aus einem anderen Metall handeln, beispielsweise aus Kupfer.

Das Walzgut 2 wird in der Walzstraße 1 in der Regel warmgewalzt. Beispielsweise kann die Walzstraße 1 eine Fertigstraße zum Warmwalzen eines Metallbandes sein. Ein Kaltwalzen ist aber nicht ausgeschlossen. Unabhängig von ihrer weiteren Ausgestaltung weist die Walzstraße 1 jedoch mehrere Walzgerüste 3a bis 3f auf. In FIG 1 sind insgesamt sechs Walzgerüste 3a bis 3f dargestellt. Die Walzstraße 1 könnte aber auch eine größere Anzahl an Walzgerüsten 3a bis 3f aufweisen, beispielsweise sieben oder acht Walzgerüste 3a bis 3f. Die Walzstraße 1 könnte ebenso auch eine kleinere Anzahl an Walzgerüsten 3a bis 3f aufweisen, beispielsweise drei, vier oder fünf Walzgerüste 3a bis 3f. Entscheidend ist, dass mindestens zwei Walzgerüste 3a bis 3f vorhanden sind und dass die Walzgerüste 3a bis 3f von dem Walzgut 2 nacheinander durchlaufen werden. Eine zugehörige Transportrichtung x ist für die Walzgerüste 3a bis 3f einheitlich. Beim Durchlaufen des jeweiligen Walzgerüsts 3a bis 3f wird das Walzgut 2 gewalzt, sein Querschnitt also reduziert.

Der Begriff "nacheinander durchlaufen werden" soll nicht bedeuten, dass das Walzgut 2 zunächst in einem der Walzgerüste 3a bis 3f vollständig gewalzt wird und erst danach im nächsten der Walzgerüste 3a bis 3f vollständig gewalzt wird usw. Vielmehr ist mit dem Begriff gemeint, dass das Walzgut 2 als Ganzes gesehen zwar gleichzeitig in mehreren Walzgerüsten 3a bis 3f gewalzt wird, dass aber jeder einzelne Abschnitt des Walzguts 2 die Walzgerüste 3a bis 3f sequenziell nacheinander durchläuft. Weiterhin sind in FIG 1 und auch in FIG 2 nur die Arbeitswalzen der Walzgerüste 3a bis 3f dargestellt. In der Regel weisen die Walzgerüste 3a bis 3f jedoch weitere Walzen auf, insbesondere im Falle einer Ausgestaltung als Quartogerüste Stützwalzen oder im Falle einer Ausgestaltung als Sextogerüste Stützwalzen und Zwischenwalzen.

Soweit nachfolgend die Begriffe "vorgeordnet" und "nachgeordnet" verwendet werden, sind sie ausnahmslos auf die Reihenfolge bezogen, in welcher die Walzgerüste 3a bis 3f von dem Walzgut 2 durchlaufen werden. Beispielsweise sind die Walzgerüste 3a und 3b dem Walzgerüst 3c vorgeordnet, wobei das Walzgerüst 3b dem Walzgerüst 3c unmittelbar vorgeordnet ist und das Walzgerüst 3a dem Walzgerüst 3c mittelbar vorgeordnet ist. In analoger Weise sind die Walzgerüste 3d, 3e und 3f dem Walzgerüst 3c nachgeordnet, wobei das Walzgerüst 3d dem Walzgerüst 3c unmittelbar nachgeordnet ist und die Walzgerüste 3e und 3f dem Walzgerüst 3c mittelbar nachgeordnet sind. Analoge Ausführungen gelten für die Beziehungen zwischen den anderen Walzgerüste 3a bis 3f.

Die Walzstraße 1 und damit auch die Walzgerüste 3a bis 3f werden von einer Steuereinrichtung 4 gesteuert. Die Steuereinrichtung 4 ist in der Regel als softwareprogrammierbare Steuereinrichtung ausgebildet. Die Steuereinrichtung 4 ist mit einem Steuerprogramm 5 programmiert. Das Steuerprogramm 5 umfasst Programmcode 6, der von der Steuereinrichtung 4 abarbeitbar ist. Im Betrieb arbeitet die Steuereinrichtung 4 den Programmcode 6 ab. Die Abarbeitung des Programmcodes 6 durch die Steuereinrichtung 4 bewirkt, dass die Steuereinrichtung 4 die Walzstraße 1 gemäß einem Betriebsverfahren steuert, das nachstehend näher erläutert wird.

Der Steuereinrichtung 4 wird eine Größe δQ bekannt, die für die Änderung des Querschnitts charakteristisch ist, mit dem das Walzgut 2 aus einem bestimmten Walzgerüst 3a bis 3f der Walzstraße 1 auslaufen soll. Bei dem bestimmten Walzgerüst 3a bis 3f kann es sich um das letzte Walzgerüst 3f der Walzstraße 1 handeln. Nachfolgend wird jedoch angenommen, dass es sich um das vorletzte Walzgerüst 3e der Walzstraße 1 handelt. Sofern das Walzgut 2 ein Band ist, ist die Größe δQ in der Regel für eine Konturänderung charakteristisch. Die charakteristische Größe δQ kann die gewünschte Querschnittsänderung als solche sein. Alternativ kann es sich um eine Größe handeln, aus der die Querschnittsänderung ermittelt werden kann. Ein Beispiel einer derartigen Größe ist die Planheit, zu deren Änderung wiederum die Kontur geändert werden muss. Wiederum alternativ kann es sich um eine Größe handeln, die bei gegebener Querschnittsänderung im Rahmen der Ermittlung der Ansteuerung der Walzgerüste 3a bis 3f anfällt. Nachfolgend wird angenommen, dass die charakteristische Größe δQ die Änderungsvorgabe selbst ist. Die charakteristische Größe δQ wird also direkt als Änderungsvorgabe bezeichnet. Die gesamten Ausführungen sind jedoch auch dann gültig, wenn als charakteristische Größe δQ ein anderer Wert vorgegeben wird, der in die gewünschte Querschnittsänderung umgerechnet werden kann.

Es ist möglich, dass die Änderungsvorgabe δQ der Steuereinrichtung 4 mittels eines entsprechenden Steuerbefehls von einer Bedienperson (nicht dargestellt) vorgegeben wird. Alternativ ist es entsprechend der Darstellung in FIG 2 beispielsweise möglich, dass an einem Messort eine Messeinrichtung 7 angeordnet ist, mittels derer eine Istgröße M des Walzguts 2 erfasst wird, beispielsweise im Falle eines flachen Walzguts 2 die Kontur und/oder die Planheit. Wird die Istgröße M erfasst, kann einer Regeleinrichtung 8 die erfasste Istgröße M und weiterhin eine zugehörige Sollgröße M* zugeführt werden.

Die Regeleinrichtung 8 kann in diesem Fall anhand der Istgröße M und der Sollgröße M* die Änderungsvorgabe δQ ermitteln, insbesondere anhand der Abweichung der Istgröße M von der Sollgröße M*. Die Regeleinrichtung 8 kann Bestandteil der Steuereinrichtung 4 sein.

Wie bereits erwähnt, wird im Rahmen des Ausführungsbeispiels angenommen, dass die Änderungsvorgabe δQ auf das vorletzte Walzgerüst 3e der Walzstraße 1 wirkt. Diese Ausgestaltung ist insbesondere im Rahmen der bereits erwähnten nicht vorveröffentlichten europäischen Patentanmeldung 18 198 437.8 vom 03.10.2018 sinnvoll. Die Wirkung auf das vorletzte Walzgerüst 3e der Walzstraße 1 ist jedoch nicht zwingend erforderlich. Die Änderungsvorgabe δQ könnte - mit Ausnahme des ersten Walzgerüsts 3a der Walzstraße 1 - auch auf ein anderes Walzgerüst 3a bis 3f der Walzstraße 1 wirken.

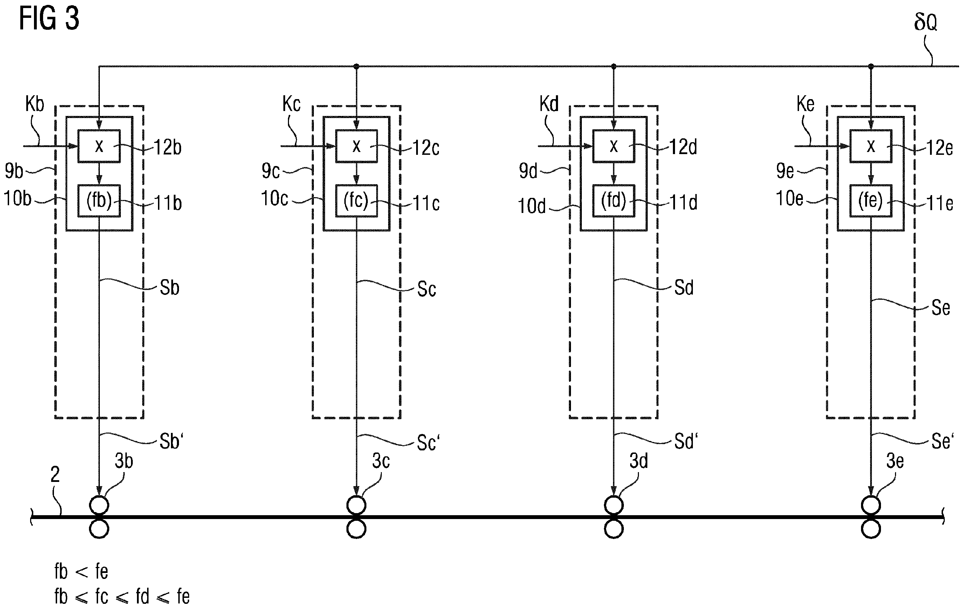

Die Steuereinrichtung 4 weist entsprechend der Darstellung in den FIG 3 eine Anzahl an Ermittlungspfaden 9b bis 9e auf. Einer der Ermittlungspfade 9b bis 9e - konkret der Ermittlungspfad 9e - ist demjenigen Walzgerüst 3e zugeordnet, auf welche die Änderungsvorgabe δQ wirkt. Weiterhin ist einer Anzahl an Walzgerüsten 3b bis 3d, die diesem Walzgerüst 3e vorgeordnet sind, ebenfalls ein jeweiliger Ermittlungspfad 9b bis 9d zugeordnet. Die Anzahl an vorgeordneten Walzgerüsten 3b bis 3d, für welche im Rahmen der erfindungsgemäßen Vorgehensweise jeweils ein Ermittlungspfad 9b bis 9d vorhanden ist, kann nach Bedarf sein. Minimal beträgt die Anzahl 1. In der Regel ist die Anzahl jedoch größer als 1. Die Anzahl kann so groß sein, dass auch für das vorderste Walzgerüst 3a der Walzstraße 1 ein Ermittlungspfad vorhanden ist. Nachfolgend wird jedoch angenommen, dass in Transportrichtung x gesehen erstmals für das zweite Walzgerüst 3b der Walzstraße 1 ein Ermittlungspfad 9b vorhanden ist.

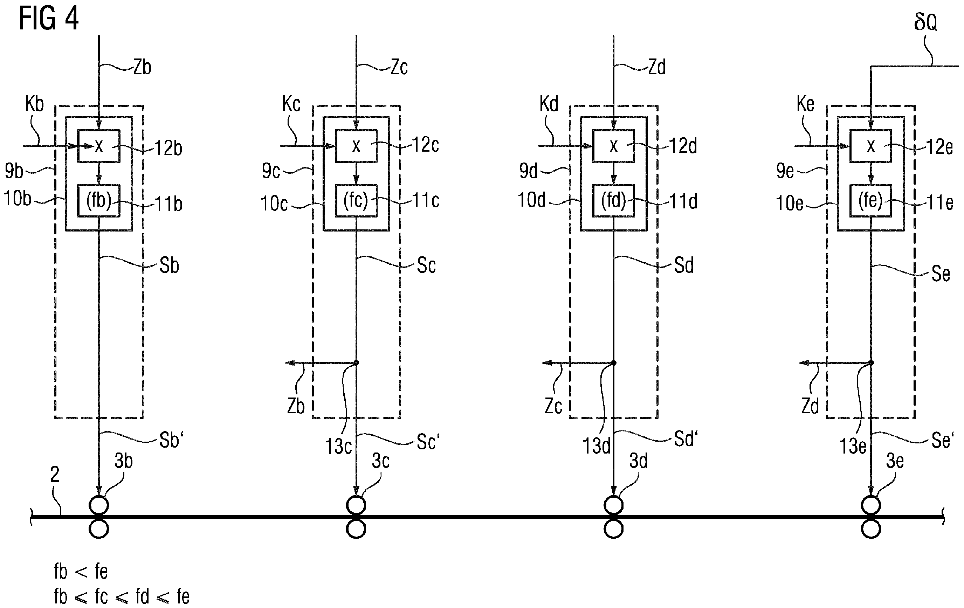

Die nachfolgenden Ausführungen beziehen sich ausnahmslos auf das bestimmte Walzgerüst 3e und die dem bestimmten Walzgerüst 3e vorgeordneten Walzgerüste 3b bis 3d, für welche ein Ermittlungspfad 9b bis 9e vorhanden ist, hier also die Walzgerüste 3b bis 3e. Das erste und das letzte Walzgerüst 3a, 3f der Walzstraße 1 werden nicht betrachtet. Allgemein gilt dies im Rahmen der vorliegenden Erfindung für alle dem bestimmten Walzgerüst 3e nachgeordneten Walzgerüste 3a bis 3f und alle Walzgerüste 3a bis 3f ab dem ersten Walzgerüst 3a, für welche kein Ermittlungspfad mehr vorhanden ist. Dieser Sachverhalt gilt nicht nur für FIG 3, sondern auch für die FIG 4 bis 7. Der guten Ordnung halber sei weiterhin erwähnt, dass von der Steuereinrichtung 4 auch für diese Walzgerüste 3a, 3f Stellgrößen ermittelt werden. Diese Walzgerüste 3a, 3f - im vorliegenden Fall also das erste und das letzte Walzgerüst 3a, 3f der Walzstraße 1 - sind aber nicht in die vorliegende Erfindung eingebunden.

In den Ermittlungspfaden 9b bis 9e ermittelt die Steuereinrichtung 4 anhand der Änderungsvorgabe δQ - die als solche für das bestimmte Walzgerüst 3e bestimmt ist - für das bestimmte Walzgerüst 3e und auch für die vorgeordneten Walzgerüste 3b bis 3d jeweils eine vorläufige Stellgröße Sb bis Se. Die Ermittlung kann beispielsweise in Ermittlungsblöcken 10b bis 10e erfolgen.

Die Steuereinrichtung 4 steuert die Walzgerüste 3b bis 3e entsprechend jeweiligen endgültigen Stellgrößen Sb' bis Se' an. Die endgültigen Stellgrößen Sb' bis Se' beeinflussen den Querschnitt, mit dem das Walzgut 2 aus dem jeweiligen Walzgerüst 3b bis 3e der Walzstraße 1 ausläuft. Die endgültigen Stellgrößen Sb' bis Se' können nach Bedarf auf das jeweilige Walzgerüst 3b bis 3e wirken. Beispielsweise können sie im Falle eines flachen Walzguts 2 auf die Walzenbiegung, auf die Walzenkühlung, auf die Walzenschmierung, auf die axiale Walzenverschiebung, auf eine Keilanstellung und andere mehr wirken.

Die Steuereinrichtung 4 ermittelt die endgültigen Stellgrößen Sb' bis Se' unter Verwertung der jeweiligen vorläufigen Stellgröße Sb bis Se. Im Rahmen der Ausgestaltung von FIG 3 korrespondieren die endgültigen Stellgrößen Sb' bis Sd' direkt und unmittelbar mit den vorläufigen Stellgrößen Sb bis Sd. Auch wenn noch eine Änderung von Zahlenwerten erfolgt, sind die vorläufigen Stellgrößen Sb bis Se und die endgültigen Stellgrößen Sb' bis Se' jedoch zumindest in der Regel gleichartig zueinander. Wenn also - rein beispielhaft - als vorläufige Stellgröße Sd eine Walzenbiegung ermittelt wird, kann diese Walzenbiegung im Rahmen der Ermittlung der endgültigen Stellgröße Sd' noch vergrößert oder verkleinert werden. Die Art der Stellgröße, dass es sich also beispielsweise um eine Walzenbiegung handelt, wird jedoch beibehalten.

Die Ermittlungsblöcke 10b bis 10d weisen jeweils einen Frequenzfilter 11b bis 11d auf. Dem jeweiligen Frequenzfilter 11b bis 11d wird die Änderungsgröße δQ zugeführt. Mittels der Frequenzfilter 11b bis 11d ermittelt die Steuereinrichtung 4 durch eine jeweilige Frequenzfilterung der Änderungsvorgabe δ Q die jeweilige vorläufige Stellgröße Sb bis Sd.

Mittels der Frequenzfilter 11b bis 11d erfolgt eine Tiefpassfilterung. Unterhalb einer jeweiligen Grenzfrequenz fb bis fd bleibt das dem jeweiligen Frequenzfilter 11b bis 11d zugeführte Signal also unverändert bzw. nahezu unverändert, oberhalb der jeweiligen Grenzfrequenz fb bis fd wird das dem jeweiligen Frequenzfilter 11b bis 11d zugeführte Signal ausgefiltert, so dass es ihm Ausgangssignal des jeweiligen Frequenzfilters 11b bis 11d nicht mehr enthalten ist. Von ihrer Bauart her gesehen können die Frequenzfilter 11b bis 11d nach Bedarf ausgebildet sein. Beispielsweise können sie als Cauerfilter oder als Butterworthfilter ausgebildet sein. Auch andere Ausgestaltungen sind möglich, beispielsweise als PT1-Filter.

Gegebenenfalls kann dem jeweiligen Frequenzfilter 11b bis 11d ein jeweiliger Multiplizierer 12b bis 12d vorgeordnet sein. In diesem Fall wird die Änderungsgröße δQ in dem jeweiligen Multiplizierer 12b bis 12d vor dem Zuführen zum jeweiligen Frequenzfilter 11b bis 11d mit einem jeweiligen Skalierungsfaktor Kb bis Kd multipliziert. Alternativ können die Multiplizierer 12b bis 12d ihrem jeweiligen Frequenzfilter 11b bis 11d nachgeordnet sein. In diesem Fall wird nicht das Eingangssignal des jeweiligen Frequenzfilters 11b bis 11d - also die Änderungsgröße δQ - mit dem jeweiligen Skalierungsfaktor Kb bis Kd multipliziert, sondern das Ausgangssignal des jeweiligen Frequenzfilters 11b bis 11d. In diesem Fall korrespondieren die vorläufigen Stellgrößen Sb bis Sd mit dem Ausgangssignal der Frequenzfilter 11b bis 11d nach dem Multiplizieren mit dem jeweiligen Skalierungsfaktor Kb bis Kd. Die Skalierungsfaktoren Kb bis Kd können insbesondere durch die Sensitivitäten der Walzgerüste 3b bis 3d bestimmt sein.

Die Frequenzfilterung kann alternativ linear oder nichtlinear sein. Im Falle einer linearen Frequenzfilterung ist die Anordnung der Multiplizierer 12b bis 12d vor den Frequenzfiltern 11b bis 11d gleichwertig zu einer Anordnung nach den Frequenzfiltern 11b bis 11d. Im Falle einer nichtlinearen Frequenzfilterung ergeben sich jedoch unterschiedliche Wirkungen.

Für die dem bestimmten Walzgerüst 3e vorgeordneten Walzgerüste 3b bis 3d erfolgt stets eine Frequenzfilterung. Für den Ermittlungspfad 9e ist eine völlig analoge Vorgehensweise möglich. Entsprechend der Darstellung in FIG 3 wird sie auch ergriffen. Auch für den Ermittlungspfad 9e und den zugehörigen Ermittlungsblock 10e ist also ein Frequenzfilter 11e vorhanden und ist gegebenenfalls auch ein Multiplizierer 12e vorhanden. Die Frequenzfilterung des Ermittlungsblocks 10e ist in diesem Fall derart ausgestaltet, dass in die Ermittlung der vorläufigen Stellgröße Se für das bestimmte Walzgerüst 3e zumindest diejenigen Frequenzanteile der Änderungsvorgabe δQ eingehen, die oberhalb der Grenzfrequenz fd des Walzgerüsts 3d liegen.

Für den Ermittlungspfad 9e ist eine Frequenzfilterung jedoch nicht zwingend erforderlich. Alternativ ist es daher ebenso möglich, dass gar keine Frequenzfilterung erfolgt, als vorläufige Stellgröße Se also die Änderungsvorgabe δQ - gegebenenfalls nach Multiplikation mit einem zugehörigen Skalierungsfaktor Ke - so verwertet wird, wie sie ist. In diesem Fall enthält die vorläufige Stellgröße Se ganz von selbst diejenigen Frequenzanteile der Änderungsvorgabe δQ, die oberhalb der Grenzfrequenz fd des Walzgerüsts 3d liegen.

Die Frequenzfilter 11b bis 11d (und gegebenenfalls auch 11e) sind derart ausgebildet, dass in die Ermittlung der jeweiligen vorläufigen Stellgröße Sb bis Se jeweils nur Frequenzanteile der Änderungsvorgabe δQ eingehen, die unter einer jeweiligen Grenzfrequenz fb bis fd bzw. fe liegen. Die jeweilige Grenzfrequenz fb bis fd eines jeweiligen vorgeordneten Walzgerüsts 3b bis 3d ist vorzugsweise durch die Transportzeit vom jeweiligen vorgeordneten Walzgerüst 3b bis 3d zu dem bestimmten Walzgerüst 3e bestimmt. Die Grenzfrequenz fe des bestimmten Walzgerüsts 3e ist entweder (wenn gar keine Filterung erfolgt) praktisch unendlich oder (wenn eine Filterung erfolgt) so hoch, dass sie sich praktisch nicht auswirkt, das vorläufige Sensorsignal Se also den Signalanteil mit den höchsten praktisch verwertbaren Frequenzen enthält.

Hierbei gilt zum einen, dass die Grenzfrequenz fb des Walzgerüsts 3b kleiner als die Grenzfrequenz fe des Walzgerüsts 3e ist. Beispielsweise kann die Grenzfrequenz fb bei 1 Hz liegen, während sie für das Walzgerüst 3e bei 20 Hz liegt. Im Regelfall nimmt die Grenzfrequenz fb bis fe von Walzgerüst 3b bis 3e zu Walzgerüst 3b bis 3e jeweils zu. Zumindest aber wird die Grenzfrequenz fb bis fe von Walzgerüst 3b bis 3e zu Walzgerüst 3b bis 3e nicht kleiner. Wenn entsprechend dem soeben gegebenen Beispiel die Grenzfrequenz fb des Walzgerüsts 3b bei 1 Hz und die Grenzfrequenz fe für das Walzgerüst 3e bei 20 Hz liegt, kann beispielsweise die Grenzfrequenz fc des Walzgerüsts 3c bei 3 Hz liegen und die Grenzfrequenz fd des Walzgerüsts 3d bei 8 Hz. Die genannten Zahlenwerte sind jedoch nicht beschränkend zu verstehen. Sie dienen lediglich der besseren Erläuterung des Prinzips.

FIG 4 zeigt eine Alternative zur Vorgehensweise von FIG 3. Nachstehend wird daher nur auf die wesentlichen Unterschiede zu FIG 3 eingegangen.

Im Rahmen der Vorgehensweise von FIG 4 werden - ebenso wie bei FIG 3 - die vorläufigen Stellgrößen Sb bis Se und daraus die endgültigen Stellgrößen Sb' bis Se' ermittelt. Im Gegensatz zur Vorgehensweise von FIG 3, bei welcher die vorläufigen Stellgrößen Sb bis Se für alle beteiligten Walzgerüste 3b bis 3e direkt anhand der Änderungsvorgabe δQ ermittelt werden, ist dies bei der Vorgehensweise von FIG 4 nur für die vorläufige Stellgröße Se für das bestimmte Walzgerüst 3e der Fall. Nur dem Ermittlungspfad 9e wird also direkt die Änderungsvorgabe δQ zugeführt. Den anderen Ermittlungspfaden 9b bis 9d wird eine jeweilige Zwischengröße Zb bis Zd zugeführt. Die Steuereinrichtung 4 ermittelt somit die vorläufigen Stellgrößen Sb bis Sd für die vorgeordneten Walzgerüste 3b bis 3d durch eine Frequenzfilterung der jeweiligen Zwischengröße Zb bis Zd. Die jeweilige Zwischengröße Zb bis Zd wiederum ermittelt die Steuereinrichtung 4 anhand der endgültigen Stellgröße Sc' bis Se' für das jeweils unmittelbar nachgeordnete Walzgerüst 3c bis 3e. Die Ermittlung erfolgt in Zwischenblöcken 13c bis 13e, die Bestandteil der Ermittlungspfad 9c bis 9e sind. Im einfachsten Fall sind die Zwischenblöcke 13c bis 13e als einfache Abgriffe ausgebildet.

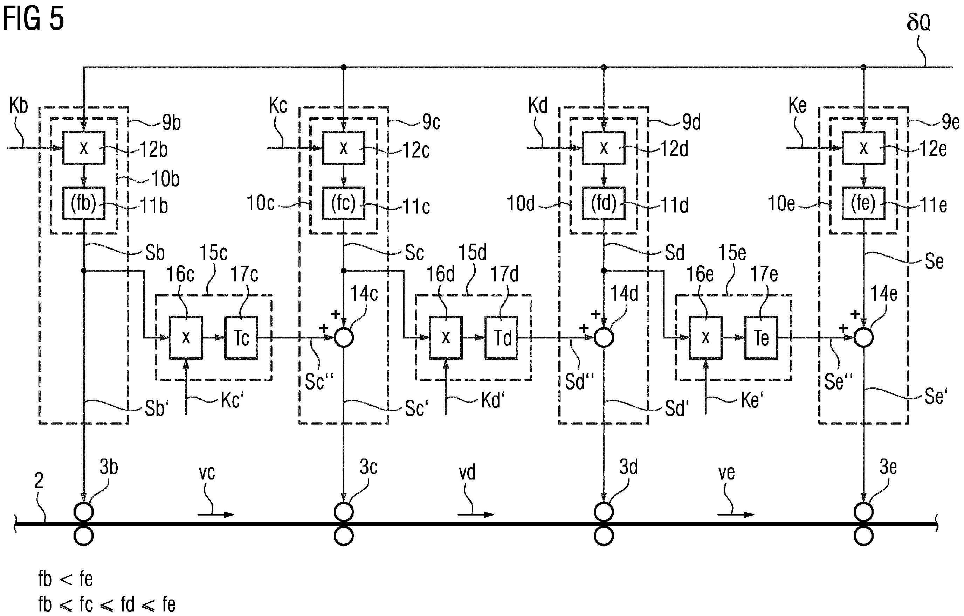

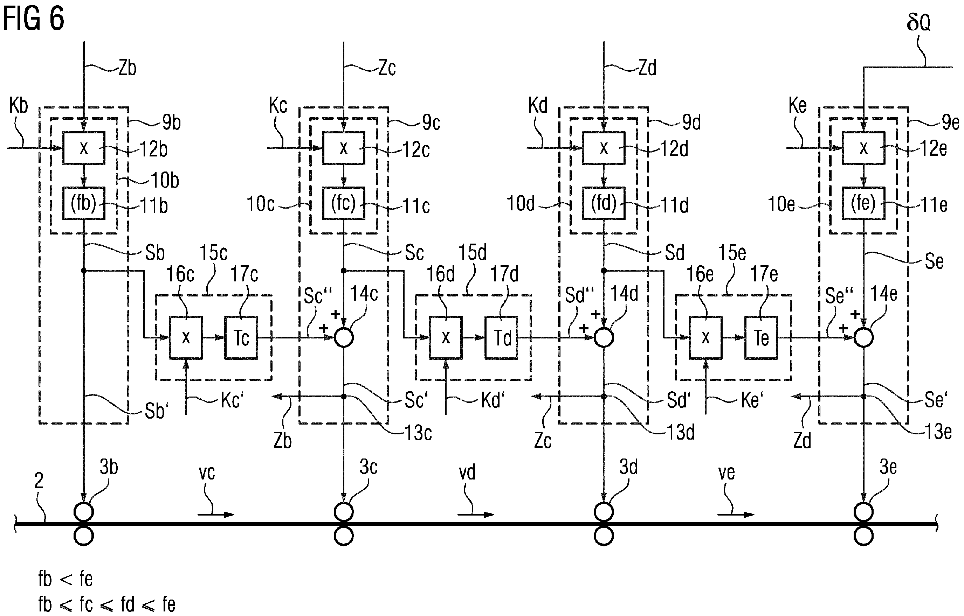

Es ist entsprechend der Darstellung in den FIG 3 und 4 möglich, dass die Steuereinrichtung 4 bei der Ermittlung der jeweiligen endgültigen Stellgröße Sc' bis Se' jeweils ausschließlich die jeweilige vorläufige Stellgröße Sc bis Se berücksichtigt. Vorzugsweise sind die Ausgestaltungen der FIG 3 und 4 jedoch entsprechend den Darstellungen der FIG 5 und 6 modifiziert. Im Rahmen der Modifizierung der FIG 5 und 6 ermittelt die Steuereinrichtung 4 die jeweilige endgültige Stellgröße Sc' bis Se' für ein jeweiliges Walzgerüst 3c bis 3e anhand der vorläufigen Stellgröße Sc bis Se für das jeweilige Walzgerüst 3c bis 3e und einer jeweiligen Korrekturgröße Sc" bis Se". Insbesondere weisen die Ermittlungspfade 9c bis 9e Knotenpunkte 14c bis 14e auf, in denen die Steuereinrichtung 4 die jeweilige endgültige Stellgröße Sc' bis Se' durch Addition der jeweiligen vorläufigen Stellgröße Sc bis Se für das jeweilige Walzgerüst 3c bis 3e und der jeweiligen Korrekturgröße Sc" bis Se" ermittelt.

Die jeweilige Korrekturgröße Sc" bis Se" ermittelt die Steuereinrichtung 4 anhand der vorläufigen Stellgröße Sb bis Sd des jeweils unmittelbar vorgeordneten Walzgerüsts 3b bis 3d. Insbesondere weist die Steuereinrichtung 4 Brückenelemente 15c bis 15e auf, denen die vorläufige Stellgröße Sb bis Sd des jeweils unmittelbar vorgeordneten Walzgerüsts 3b bis 3d zugeführt wird und mittels derer die Steuereinrichtung 4 die jeweilige Korrekturgröße Sc" bis Se" ermittelt. Insbesondere kann die Steuereinrichtung 4 in Multiplizierern 16c bis 16e der Brückenelemente 15c bis 15e beispielsweise eine Skalierung mit einem entsprechenden Skalierungsfaktor Kc' bis Ke' vornehmen. Die Skalierungsfaktoren Kc' bis Ki' können - analog zu den Skalierungsfaktoren Kb bis Kd - insbesondere durch die Sensitivitäten der Walzgerüste 3b bis 3e bestimmt sein.

Eine Ausnahme für diese Vorgehensweise gilt für das vorderste Walzgerüst 3b, das einen Ermittlungspfad 9b bis 9d aufweist. Dessen vorläufige Stellgröße Sb wird im Rahmen der Ermittlung der zugehörigen endgültigen Stellgröße Sb' nicht mehr mit einer Korrekturgröße korrigiert. Dies gilt, soweit es die vorliegende Erfindung betrifft, auch dann, wenn dem entsprechenden Walzgerüst 3b noch mindestens ein Walzgerüst 3a der Walzstraße 1 - hier das Walzgerüst 3a - vorgeordnet ist.

Wie in den FIG 5 und 6 dargestellt, weisen die Brückenelemente 15c bis 15e vorzugsweise weiterhin Verzögerungsglieder 17c bis 17e auf. Mittels der Verzögerungsglieder 17c bis 17e verzögert die Steuereinrichtung 4 die jeweilige Korrekturgröße Sc" bis Se" gegenüber der vorläufigen Stellgröße Sb bis Sd des unmittelbar vorgeordneten Walzgerüsts 3b bis 3d um eine jeweilige Verzögerungszeit Tc bis Te. Die jeweilige Verzögerungszeit Tc bis Te ist in der Regel im wesentlichen durch die jeweilige Transportzeit bestimmt, die das Walzgut 2 benötigt, um die Strecke von dem jeweils vorgeordneten Walzgerüst 3b bis 3d zum jeweiligen Walzgerüst 3c bis 3e zurückzulegen. Die jeweilige Verzögerungszeit Tc bis Te ist also in der Regel durch den Abstand des jeweiligen Walzgerüsts 3c bis 3e von dem jeweils unmittelbar vorgeordneten Walzgerüst 3b bis 3d und die jeweilige Walzgeschwindigkeit vc bis ve bestimmt, mit der das Walzgut 2 aus dem jeweils unmittelbar vorgeordneten Walzgerüst 3b bis 3d ausläuft bzw. in das jeweilige Walzgerüst 3c bis 3e einläuft. Gegebenenfalls kann die jeweilige Verzögerungszeit Tc bis Te, ausgehend von der jeweiligen Transportzeit, noch mit einem jeweiligen Skalierungsfaktor skaliert werden. Der jeweilige Skalierungsfaktor liegt in der Regel zwischen 0,5 und 2,0, meist zwischen 0,8 und 1,25. Die Skalierungsfaktoren für die Verzögerungsglieder 17c bis 17e können einheitlich oder individuell bestimmt sein.

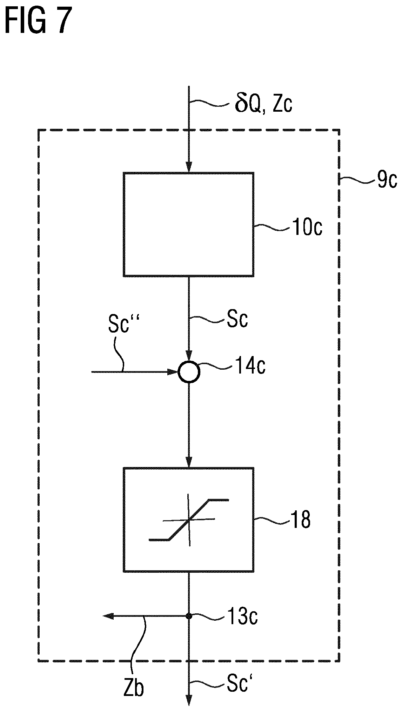

Im Rahmen der Ausgestaltungen der FIG 3 bis 6 erfolgt die Frequenzfilterung im jeweiligen Frequenzfilter 11b bis 11e. FIG 7 zeigt eine mögliche Ausgestaltung des Ermittlungspfades 9c. Für die Ermittlungspfade 9b, 9d und 9e gelten analoge Ausführungen.

Entsprechend der Darstellung in FIG 7 kann dem Ermittlungsblock 10c ein Begrenzungselement 18 nachgeordnet sein. In diesem Fall begrenzt die Steuereinrichtung 4 mittels des Begrenzungselements 18 das Ausgangssignal des Ermittlungsblocks 10c. Sofern der Knotenpunkt 14c vorhanden ist, ist das Begrenzungselement 18 dem Knotenpunkt 14c im Signalfluss nachgeordnet. Sofern der Zwischenblock 13c vorhanden ist, ist das Begrenzungselement 18 dem Zwischenblock 13c im Signalfluss vorgeordnet.

Die Steuereinrichtung 4 ist, wie bereits erwähnt, in der Regel als softwareprogrammierbare Steuereinrichtung ausgebildet. Die Funktionsweise der Steuereinrichtung 4 wird daher durch das Steuerprogramm 5 bewirkt. Das Steuerprogramm 5 und die Ausführung von dessen Programmcode 6 durch die Steuereinrichtung 4 bewirken daher, dass die Steuereinrichtung 4 die oben stehend erwähnten den Funktionseinheiten, beispielsweise die Ermittlungspfade 9b bis 9e oder die Zwischenblöcke 13c bis 13e oder die Brückenelemente 15c bis 15e, als Softwareblöcke realisiert.

Die vorliegende Erfindung weist viele Vorteile auf. Insbesondere werden Stelleingriffe zur Kompensation der Änderungsvorgabe δQ auf mehrere Walzgerüste 3b bis 3e verteilt, so dass die einzelnen Walzgerüste 3b bis 3e nur in geringerem Ausmaß angesteuert werden müssen. Dennoch kann eine hohe Dynamik bei der Kompensation der Änderungsvorgabe δQ erreicht werden. Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

### Bezugszeichenliste

- 1: Walzstraße
- 2: Walzgut
- 3a bis 3f: Walzgerüste
- 4: Steuereinrichtung
- 5: Steuerprogramm
- 6: Programmcode
- 7: Messeinrichtung
- 8: Regeleinrichtung
- 9b bis 9e: Ermittlungspfade
- 10b bis 10e: Ermittlungsblöcke
- 11b bis 11e: Frequenzfilter
- 12b bis 12e: Multiplizierer
- 13c bis 13e: Zwischenblöcke
- 14c bis 14e: Knotenpunkte
- 15c bis 15e: Brückenelemente
- 16c bis 16e: Multiplizierer
- 17c bis 17e: Verzögerungsglieder
- 18: Begrenzungselement

- fb bis fe: Grenzfrequenzen
- Kb bis Ke: Skalierungsfaktoren
- Kc' bis Ke': Skalierungsfaktoren
- M: Istgröße
- M*: Sollgröße
- Sb bis Se: vorläufige Stellgrößen
- Sb' bis Se': endgültige Stellgrößen
- Sc" bis Se": Korrekturgrößen
- Tc bis Te: Verzögerungszeiten
- vc bis ve: Walzgeschwindigkeiten
- x: Transportrichtung
- Zb bis Zd: Zwischengröße

- δQ: Änderungsvorgabe/charakteristische Größe

## Patentansprüche

1. Betriebsverfahren für eine Walzstraße (1) zum Walzen eines Walzguts (2) aus Metall,
- wobei die Walzstraße (1) mehrere Walzgerüste (3a bis 3f) aufweist, die von dem Walzgut (2) in einer für die Walzgerüste (3a bis 3f) einheitlichen Transportrichtung (x) nacheinander durchlaufen werden, so dass das Walzgut (2) in den Walzgerüsten (3a bis 3f) nacheinander gewalzt wird,
- wobei eine Steuereinrichtung (4) der Walzstraße (1) aufgrund einer für die Änderung des Querschnitts, mit dem das Walzgut (2) aus einem bestimmten Walzgerüst (3e) der Walzstraße (1) auslaufen soll, charakteristischen Größe (δQ) für dieses Walzgerüst (3e) und eine Anzahl von diesem Walzgerüst (3e) in Transportrichtung (x) gesehen vorgeordneten Walzgerüsten (3b bis 3d) der Walzstraße (1) zunächst eine jeweilige vorläufige Stellgröße (Sb bis Se) und unter Verwertung der jeweiligen vorläufigen Stellgröße (Sb bis Se) eine jeweilige endgültige Stellgröße (Sb' bis Se') ermittelt,
- wobei die jeweilige endgültige Stellgröße (Sb' bis Se') den Querschnitt beeinflusst, mit dem das Walzgut (2) aus dem jeweiligen Walzgerüst (3b bis 3e) der Walzstraße (1) ausläuft,
- wobei die Steuereinrichtung (4) die Walzgerüste (3b bis 3e) entsprechend der jeweiligen endgültigen Stellgröße (Sb' bis Se') ansteuert,
**dadurch gekennzeichnet,**
- **dass** die Steuereinrichtung (4) die jeweilige vorläufige Stellgröße (Sb bis Sd) für die vorgeordneten Walzgerüste (3b bis 3d) durch eine jeweilige Frequenzfilterung der charakteristischen Größe (δQ) oder einer aus der charakteristischen Größe (δQ) ermittelten jeweiligen Zwischengröße (Zb bis Zd) ermittelt,
- **dass** die Frequenzfilterungen derart ausgestaltet sind, dass in die Ermittlung der jeweiligen vorläufigen Stellgröße (Sb bis Sd) für die vorgeordneten Walzgerüste (3b bis 3d) jeweils nur Frequenzanteile der charakteristischen Größe (δQ) eingehen, die unter einer jeweiligen Grenzfrequenz (fb bis fd) liegen, und
- **dass**, bezogen auf die Anzahl von dem bestimmten Walzgerüst (3e) in Transportrichtung (x) gesehen vorgeordneten Walzgerüsten (3b bis 3d) der Walzstraße (1) und in Transportrichtung (x) gesehen, die Grenzfrequenz (fb bis fd) von Walzgerüst (3b bis 3d) zu Walzgerüst (3b bis 3d) jeweils gleichbleibt oder zunimmt und
- **dass** die Steuereinrichtung (4) die vorläufige Stellgröße (Se) für das bestimmte Walzgerüst (3e) derart bestimmt, dass in die Ermittlung der vorläufigen Stellgröße (Se) für das bestimmte Walzgerüst (3e) zumindest diejenigen Frequenzanteile der charakteristischen Größe (δQ) eingehen, die oberhalb der Grenzfrequenz (fd) des dem bestimmten Walzgerüst (3e) in Transportrichtung (x) gesehen unmittelbar vorgeordneten Walzgerüsts (3d) liegen.

2. Betriebsverfahren nach Anspruch 1,
**dadurch gekennzeichnet ,**
- **dass** die Steuereinrichtung (4) die vorläufige Stellgröße (Se) für das bestimmte Walzgerüst (3e) der Walzstraße (1) anhand der charakteristischen Größe (δQ) ermittelt, insbesondere durch eine Frequenzfilterung der charakteristischen Größe (δQ),
- **dass** die Steuereinrichtung (4) die vorläufigen Stellgrößen (Sb bis Sd) für die vorgeordneten Walzgerüste (3b bis 3d) durch eine Frequenzfilterung der jeweiligen Zwischengröße (Zb bis Zd) ermittelt und
- **dass** die Steuereinrichtung (4) die jeweilige Zwischengröße (Zb bis Zd) anhand der endgültigen Stellgröße (Sc' bis Se') für das in Transportrichtung (x) gesehen jeweils unmittelbar nachgeordnete Walzgerüst (3c bis 3e) ermittelt.

3. Betriebsverfahren nach Anspruch 1 oder 2,
**dadurch gekennzeichnet,**
- **dass** die Steuereinrichtung (4) die jeweilige endgültige Stellgröße (Sc' bis Se') für ein jeweiliges Walzgerüst (3c bis 3e) anhand der vorläufigen Stellgröße (Sc bis Se) für das jeweilige Walzgerüst (3c bis 3e) und einer jeweiligen Korrekturgröße (Sc" bis Se") ermittelt und
- **dass** die Steuereinrichtung (4) die jeweilige Korrekturgröße (Sc" bis Se") anhand der vorläufigen Stellgröße (Sb bis Sd) des in Transportrichtung (x) gesehen jeweils unmittelbar vorgeordneten Walzgerüsts (3b bis 3d) ermittelt.

4. Betriebsverfahren nach Anspruch 3,
**dadurch gekennzeichnet,**
**dass** die Steuereinrichtung (4) die jeweilige Korrekturgröße (Sc" bis Se") gegenüber der vorläufigen Stellgröße (Sb bis Sd) des in Transportrichtung (x) gesehen unmittelbar vorgeordneten Walzgerüsts (3b bis 3d) um eine jeweilige Verzögerungszeit (Tc bis Te) verzögert.

5. Betriebsverfahren nach einem der obigen Ansprüche,
**dadurch gekennzeichnet,**
**dass** die Steuereinrichtung (4) die endgültigen Stellgrößen (Sb' bis Se') mittels eines jeweiligen Begrenzungselements (18) begrenzt.

6. Steuerprogramm, wobei das Steuerprogramm Programmcode (6) umfasst, der von einer Steuereinrichtung (4) für eine Walzstraße (1) mit mehreren Walzgerüsten (3a bis 3f) abarbeitbar ist, wobei die Abarbeitung des Programmcodes (6) bewirkt, dass die Steuereinrichtung (4) die Walzstraße (1) gemäß einem Betriebsverfahren nach einem der obigen Ansprüche steuert.

7. Steuereinrichtung für eine Walzstraße (1) zum Walzen eines Walzguts (2) aus Metall, wobei die Walzstraße (1) mehrere Walzgerüste (3a bis 3f) aufweist, die von dem Walzgut (2) in einer für die Walzgerüste (3a bis 3f) einheitlichen Transportrichtung (x) nacheinander durchlaufen werden, so dass das Walzgut (2) in den Walzgerüsten (3a bis 3f) nacheinander gewalzt wird,
- wobei die Steuereinrichtung Ermittlungspfade (9b bis 9e) aufweist, mittels derer die Steuereinrichtung aufgrund einer für die Änderung des Querschnitts, mit dem das Walzgut (2) aus einem bestimmten Walzgerüst (3e) der Walzstraße (1) auslaufen soll, charakteristischen Größe (δQ) für dieses Walzgerüst (3e) und eine Anzahl von diesem Walzgerüst (3e) in Transportrichtung (x) gesehen vorgeordneten Walzgerüsten (3b bis 3d) der Walzstraße (1) zunächst eine jeweilige vorläufige Stellgröße (Sb bis Se) und unter Verwertung der jeweiligen vorläufigen Stellgröße (Sb bis Se) eine jeweilige endgültige Stellgröße (Sb' bis Se') ermittelt,
- wobei die jeweilige endgültige Stellgröße (Sb' bis Se') den Querschnitt beeinflusst, mit dem das Walzgut (2) aus dem jeweiligen Walzgerüst (3b bis 3e) der Walzstraße (1) ausläuft,
- wobei die Steuereinrichtung die Walzgerüste (3b bis 3e) entsprechend der jeweiligen endgültigen Stellgröße (Sb' bis Se') ansteuert,
**dadurch gekennzeichnet,**
- **dass** die Ermittlungspfade (9b bis 9d) der vorgeordneten Walzgerüste (3b bis 3d) Frequenzfilter (11b bis 11d) aufweisen, mittels derer die Steuereinrichtung die jeweilige vorläufige Stellgröße (Sb bis Sd) für die vorgeordneten Walzgerüste (3b bis 3d) durch eine jeweilige Frequenzfilterung der charakteristischen Größe (δQ) oder einer aus der charakteristischen Größe (δQ) ermittelten jeweiligen Zwischengröße (Zb bis Zd) ermittelt,
- **dass** die Frequenzfilter (11b bis 11d) derart ausgebildet sind, dass in die Ermittlung der jeweiligen vorläufigen Stellgröße (Sb bis Sd) für die vorgeordneten Walzgerüste (3b bis 3d) jeweils nur Frequenzanteile der charakteristischen Größe (δQ) eingehen, die unter einer jeweiligen Grenzfrequenz (fb bis fd) liegen, und
- **dass**, bezogen auf die Anzahl von dem bestimmten Walzgerüst (3e) in Transportrichtung (x) gesehen vorgeordneten Walzgerüsten (3b bis 3d) der Walzstraße (1) und in Transportrichtung (x) gesehen, die Grenzfrequenz (fb bis fd) von Walzgerüst (3b bis 3d) zu Walzgerüst (3b bis 3d) jeweils gleichbleibt oder zunimmt und
- **dass** der Ermittlungspfad (9e) für das bestimmte Walzgerüst (3e) derart ausgebildet ist, dass in die Ermittlung der vorläufigen Stellgröße (Se) für das bestimmte Walzgerüst (3e) zumindest diejenigen Frequenzanteile der charakteristischen Größe (δQ) eingehen, die oberhalb der Grenzfrequenz (fd) des dem bestimmten Walzgerüst (3e) in Transportrichtung (x) gesehen unmittelbar vorgeordneten Walzgerüsts (3d) liegen.

8. Steuereinrichtung nach Anspruch 7,
**dadurch gekennzeichnet,**
- **dass** die Steuereinrichtung dem Ermittlungspfad (9e) für das bestimmte Walzgerüst (3e) der Walzstraße (1) die charakteristische Größe (δQ) zuführt,
- **dass** die Steuereinrichtung den Ermittlungspfaden (9b bis 9d) für die vorgeordneten Walzgerüste (3b bis 3d) die jeweilige Zwischengröße (Zb bis Zd) zuführt und
- **dass** die Steuereinrichtung Zwischenblöcke (13c bis 13e) aufweist, mittels derer die Steuereinrichtung für die vorgeordneten Walzgerüste (3b bis 3d) die jeweilige Zwischengröße (Zb bis Zd) anhand der endgültigen Stellgröße (Sc' bis Se') für das in Transportrichtung (x) gesehen jeweils unmittelbar nachgeordnete Walzgerüst (3c bis 3e) ermittelt.

9. Steuereinrichtung nach Anspruch 7 oder 8,
**dadurch gekennzeichnet,**
- **dass** die Ermittlungspfade (9c bis 9e) Knotenpunkte (14c bis 14e) aufweisen, in denen die Steuereinrichtung die jeweilige endgültige Stellgröße (Sc' bis Se') durch Addition der jeweiligen vorläufigen Stellgröße (Sc bis Se) für das jeweilige Walzgerüst (3c bis 3e) und einer jeweiligen Korrekturgröße (Sc" bis Se") ermittelt, und
- **dass** die Steuereinrichtung Brückenelemente (15c bis 15e) aufweist, mittels derer die Steuereinrichtung die jeweilige Korrekturgröße (Sc" bis Se") anhand der vorläufigen Stellgröße (Sb bis Sd) des in Transportrichtung (x) gesehen jeweils unmittelbar vorgeordneten Walzgerüsts (3b bis 3d) ermittelt.

10. Steuereinrichtung nach Anspruch 9,
**dadurch gekennzeichnet,**
**dass** die Brückenelemente (15c bis 15e) Verzögerungsglieder (17c bis 17e) aufweisen, mittels derer die Steuereinrichtung die jeweilige Korrekturgröße (Sc" bis Se") gegenüber der vorläufigen Stellgröße (Sb bis Sd) des in Transportrichtung (x) gesehen unmittelbar vorgeordneten Walzgerüsts (3b bis 3d) um eine jeweilige Verzögerungszeit (Tc bis Te) verzögert.

11. Steuereinrichtung nach einem der Ansprüche 7 bis 10,
**dadurch gekennzeichnet,**
**dass** die Ermittlungspfade (9b bis 9e) ein jeweiliges Begrenzungselement (18) aufweisen, mittels dessen die Steuereinrichtung die jeweilige endgültige Stellgröße (Sb' bis Se') begrenzt.

12. Steuereinrichtung nach einem der Ansprüche 7 bis 11,
**dadurch gekennzeichnet,**
**dass** die Steuereinrichtung als softwareprogrammierbare Einrichtung ausgebildet ist.

13. Walzstraße für ein flaches Walzgut (2),
- wobei die Walzstraße mehrere Walzgerüste (3a bis 3f) aufweist, die von dem Walzgut (2) in einer für die Walzgerüste (3a bis 3f) einheitlichen Transportrichtung (x) nacheinander durchlaufen werden, so dass das Walzgut (2) in den Walzgerüsten (3a bis 3f) nacheinander gewalzt wird,
- wobei die Walzstraße eine Steuereinrichtung (4) aufweist, von der die Walzgerüste (3a bis 3f) der Walzstraße gesteuert werden,
**dadurch gekennzeichnet,**
**dass** die Steuereinrichtung (4) als Steuereinrichtung nach einem der Ansprüche 7 bis 12 ausgebildet ist.

## Claims

1. Operating method for a roll train (1) for rolling rolling stock (2) composed of metal,
- wherein the roll train (1) has a plurality of rolling stands (3a to 3f), through which the rolling stock (2) passes successively in a transfer direction (x) that is uniform for the rolling stands (3a to 3f), with the result that the rolling stock (2) is rolled successively in the rolling stands (3a to 3f),
- wherein, on the basis of a variable (δQ) which is characteristic of the change in the cross section with which the rolling stock (2) is supposed to run out of a particular rolling stand (3e) of the roll train (1), a control device (4) of the roll train (1) first of all determines, for this rolling stand (3e) and a number of rolling stands (3b to 3d) of the roll train (1) which are arranged upstream of said rolling stand (3e) when viewed in the transfer direction (x), a respective provisional manipulated variable (Sb to Se) and, using the respective provisional manipulated variable (Sb to Se), determines a respective final manipulated variable (Sb' to Se'),
- wherein the respective final manipulated variable (Sb' to Se') influences the cross section with which the rolling stock (2) runs out of the respective rolling stand (3b to 3e) of the roll train (1),
- wherein the control device (4) activates the rolling stands (3b to 3e) in accordance with the respective final manipulated variable (Sb' to Se'),
**characterized**
- **in that** the control device (4) determines the respective provisional manipulated variable (Sb to Sd) for the upstream rolling stands (3b to 3d) by respective frequency filtering of the characteristic variable (δQ) or of a respective intermediate variable (Zb to Zd) determined from the characteristic variable (δQ),
- **in that** the frequency filtering operations are configured in such a way that the determination of the respective provisional manipulated variable (Sb to Sd) for the upstream rolling stands (3b to 3d) in each case includes only frequency components of the characteristic variable (δQ) which are below a respective limiting frequency (fb to fd), and
- **in that**, in respect of the number of rolling stands (3b to 3d) of the roll train (1) which are upstream of the particular rolling stand (3e) when viewed in the transfer direction (x), the limiting frequency (fb to fd) in each case remains the same or increases from rolling stand (3b to 3d) to rolling stand (3b to 3d), and
- **in that** the control device (4) determines the provisional manipulated variable (Se) for the particular rolling stand (3e) in such a way that the determination of the provisional manipulated variable (Se) for the particular rolling stand (3e) includes at least those frequency components of the characteristic variable (δQ) which are above the limiting frequency (fd) of the rolling stand (3d) which is immediately upstream of the particular rolling stand (3e) when viewed in the transfer direction (x).

2. Operating method according to Claim 1,
**characterized**
- **in that** the control device (4) determines the provisional manipulated variable (Se) for the particular rolling stand (3e) of the roll train (1) on the basis of the characteristic variable (δQ), in particular by frequency filtering of the characteristic variable (δQ),
- **in that** the control device (4) determines the provisional manipulated variables (Sb to Sd) for the upstream rolling stands (3b to 3d) by frequency filtering of the respective intermediate variable (Zb to Zd), and
- **in that** the control device (4) determines the respective intermediate variable (Zb to Zd) on the basis of the final manipulated variable (Sc' to Se') for the respective rolling stand (3c to 3e) arranged immediately downstream when viewed in the transfer direction (x).

3. Operating method according to Claim 1 or 2,
**characterized**
- **in that** the control device (4) determines the respective final manipulated variable (Sc' to Se') for a respective rolling stand (3c to 3e) on the basis of the provisional manipulated variable (Sc to Se) for the respective rolling stand (3c to 3e) and of a respective correction variable (Sc" to Se''), and
- **in that** the control device (4) determines the respective correction variable (Sc" to Se") on the basis of the provisional manipulated variable (Sb to Sd) of the respective rolling stand (3b to 3d) arranged immediately upstream when viewed in the transfer direction (x).

4. Operating method according to Claim 3,
**characterized**
**in that** the control device (4) delays the respective correction variable (Sc" to Se") with respect to the provisional manipulated variable (Sb to Sd) of the rolling stand (3b to 3d) arranged immediately upstream when viewed in the transfer direction (x) by a respective delay time (Tc to Te).

5. Operating method according to any of the above claims, **characterized**
**in that** the control device (4) limits the final manipulated variables (Sb' to Se') by means of a respective limiting element (18).

6. Control program, wherein the control program comprises program code (6) which can be executed by a control device (4) for a roll train (1) having a plurality of rolling stands (3a to 3f), wherein execution of the program code (6) has the effect that the control device (4) controls the roll train (1) in accordance with an operating method according to any of the above claims.

7. Control device for a roll train (1) for rolling rolling stock (2) composed of metal, wherein the roll train (1) has a plurality of rolling stands (3a to 3f), through which the rolling stock (2) passes successively in a transfer direction (x) that is uniform for the rolling stands (3a to 3f), with the result that the rolling stock (2) is rolled successively in the rolling stands (3a to 3f),
- wherein the control device has determination paths (9b to 9e), by means of which, on the basis of a variable (δQ) which is characteristic of the change in the cross section with which the rolling stock (2) is supposed to run out of a particular rolling stand (3e) of the roll train (1), the control device first of all determines, for this rolling stand (3e) and a number of rolling stands (3b to 3d) of the roll train (1) which are arranged upstream of said rolling stand (3e) when viewed in the transfer direction (x), a respective provisional manipulated variable (Sb to Se) and, using the respective provisional manipulated variable (Sb to Se), determines a respective final manipulated variable (Sb' to Se'),
- wherein the respective final manipulated variable (Sb' to Se') influences the cross section with which the rolling stock (2) runs out of the respective rolling stand (3b to 3e) of the roll train (1),
- wherein the control device activates the rolling stands (3b to 3e) in accordance with the respective final manipulated variable (Sb' to Se'),
**characterized**
- **in that** the determination paths (9b to 9d) of the upstream rolling stands (3b to 3d) have frequency filters (11b to 11d), by means of which the control device determines the respective provisional manipulated variable (Sb to Sd) for the upstream rolling stands (3b to 3d) by respective frequency filtering of the characteristic variable (δQ) or of a respective intermediate variable (Zb to Zd) determined from the characteristic variable (δQ),
- **in that** the frequency filters (11b to 11d) are designed in such a way that the determination of the respective provisional manipulated variable (Sb to Sd) for the upstream rolling stands (3b to 3d) in each case includes only frequency components of the characteristic variable (δQ) which are below a respective limiting frequency (fb to fd), and
- **in that**, in respect of the number of rolling stands (3b to 3d) of the roll train (1) which are upstream of the particular rolling stand (3e) when viewed in the transfer direction (x), the limiting frequency (fb to fd) in each case remains the same or increases from rolling stand (3b to 3d) to rolling stand (3b to 3d), and
- **in that** the determination path (9e) for the particular rolling stand (3e) is designed in such a way that the determination of the provisional manipulated variable (Se) for the particular rolling stand (3e) includes at least those frequency components of the characteristic variable (δQ) which are above the limiting frequency (fd) of the rolling stand (3d) which is immediately upstream of the particular rolling stand (3e) when viewed in the transfer direction (x).

8. Control device according to Claim 7,
**characterized**
- **in that** the control device feeds the characteristic variable (δQ) to the determination path (9e) for the particular rolling stand (3e) of the roll train (1),
- **in that** the control device feeds the respective intermediate variable (Zb to Zd) to the determination paths (9b to 9d) for the upstream rolling stands (3b to 3d), and
- **in that** the control device has intermediate blocks (13c to 13e), by means of which the control device determines the respective intermediate variable (Zb to Zd) for the upstream rolling stands (3b to 3d) on the basis of the final manipulated variable (Sc' to Se') for the respective rolling stand (3c to 3e) arranged immediately downstream when viewed in the transfer direction (x).

9. Control device according to Claim 7 or 8,
**characterized**
- **in that** the determination paths (9c to 9e) have nodes (14c to 14e), at which the control device determines the respective final manipulated variable (Sc' to Se') by addition of the respective provisional manipulated variable (Sc to Se) for the respective rolling stand (3c to 3e) and of a respective correction variable (Sc" to Se"), and
- **in that** the control device has bridge elements (15c to 15e), by means of which the control device determines the respective correction variable (Sc" to Se") on the basis of the provisional manipulated variable (Sb to Sd) of the respective rolling stand (3b to 3d) arranged immediately upstream when viewed in the transfer direction (x).

10. Control device according to Claim 9,
**characterized**
**in that** the bridge elements (15c to 15e) have delay elements (17c to 17e), by means of which the control device delays the respective correction variable (Sc" to Se") with respect to the provisional manipulated variable (Sb to Sd) of the rolling stand (3b to 3d) arranged immediately upstream when viewed in the transfer direction (x) by a respective delay time (Tc to Te) .

11. Control device according to any of Claims 7 to 10, **characterized**
**in that** the determination paths (9b to 9e) have a respective limiting element (18), by means of which the control device limits the respective final manipulated variable (Sb' to Se').

12. Control device according to any of Claims 7 to 11, **characterized**
**in that** the control device is designed as a software-programmable device.

13. Roll train for flat rolling stock (2),
- wherein the roll train has a plurality of rolling stands (3a to 3f), through which the rolling stock (2) passes successively in a transfer direction (x) that is uniform for the rolling stands (3a to 3f), with the result that the rolling stock (2) is rolled successively in the rolling stands (3a to 3f),
- wherein the roll train has a control device (4), by which the rolling stands (3a to 3f) of the roll train are controlled,
**characterized**
**in that** the control device (4) is designed as a control device according to any of Claims 7 to 12.

## Revendications

1. Procédé de fonctionnement pour un train de laminage (1) pour le laminage d'une matière en laminage (2) en métal,
- dans lequel le train de laminage (1) comprend plusieurs cages de laminoir (3a à 3f), lesquelles sont traversées successivement par la matière en laminage (2) dans une direction de transport (x) unique pour les cages de laminoir (3a à 3f), de telle sorte que la matière en laminage (2) soit laminée successivement dans les cages de laminoir (3a à 3f),
- dans lequel un dispositif de commande (4) du train de laminage (1) détermine tout d'abord, sur la base d'une grandeur caractéristique (δQ) pour la modification de la section transversale avec laquelle la matière en laminage (2) doit sortir d'une cage de laminoir (3e) déterminée du train de laminage (1), de cette cage de laminoir (3e) et d'un certain nombre de cages de laminoir (3b à 3d) du train de laminage (1) disposées, vues dans la direction de transport (x), en amont de cette cage de laminoir (3e), une grandeur de réglage provisoire (Sb à Se) respective et, à l'aide de la grandeur de réglage provisoire (Sb à Se) respective, une grandeur de réglage définitive (Sb' à Se') respective,
- dans lequel la grandeur de réglage définitive (Sb' à Se') respective influence la section transversale avec laquelle la matière en laminage (2) sort de la cage de laminoir (3b à 3e) respective du train de laminage (1),
- dans lequel le dispositif de commande (4) commande les cages de laminoir (3b à 3e) en fonction de la grandeur de réglage définitive (Sb' à Se') respective,
**caractérisé**
- **en ce que** le dispositif de commande (4) détermine la grandeur de réglage provisoire (Sb à Sd) respective pour les cages de laminoir disposées en amont (3b à 3d) par l'intermédiaire d'un filtrage de fréquence respectif de la grandeur caractéristique (δQ) ou d'une grandeur intermédiaire (Zb à Zd) respective déterminée à partir de la grandeur caractéristique (δQ),
- **en ce que** les filtrages de fréquence sont conçus de telle sorte que, dans la détermination de la grandeur de réglage provisoire (Sb à Sd) respective pour les cages de laminoir disposées en amont (3b à 3d), entrent respectivement seules des composantes de fréquence de la grandeur caractéristique (δQ) qui se situent au-dessous d'une fréquence limite (fb à fd) respective, et
- **en ce que**, par rapport au nombre de cages de laminoir (3b à 3d) du train de laminage (1) disposées, vues dans la direction de transport (x), en amont de la cage de laminoir (3e) déterminée, et vue dans la direction de transport (x), la fréquence limite (fb à fd) d'une cage de laminoir (3b à 3d) à une cage de laminoir (3b à 3d) respectivement reste stationnaire ou augmente et
- **en ce que** le dispositif de commande (4) détermine la grandeur de réglage provisoire (Se) pour la cage de laminoir (3e) déterminée, de telle sorte que, dans la détermination de la grandeur de réglage provisoire (Se) pour la cage de laminoir (3e) déterminée, entrent au moins les composantes de fréquence de la grandeur caractéristique (δQ) qui se situent au-dessus de la fréquence limite (fd) de la cage de laminoir (3d) disposée, vue dans la direction de transport (x), directement en amont de la cage de laminoir (3e) déterminée.

2. Procédé de fonctionnement selon la revendication 1, **caractérisé**
- **en ce que** le dispositif de commande (4) détermine la grandeur de réglage provisoire (Se) pour la cage de laminoir (3e) déterminée du train de laminage (1) à l'aide de la grandeur caractéristique (δQ), en particulier par l'intermédiaire d'un filtrage de fréquence de la grandeur caractéristique (δQ),
- **en ce que** le dispositif de commande (4) détermine les grandeurs de réglage provisoires (Sb à Sd) pour les cages de laminoir disposées en amont (3b à 3d) par l'intermédiaire d'un filtrage de fréquence de la grandeur intermédiaire (Zb à Zd) respective et
- **en ce que** le dispositif de commande (4) détermine la grandeur intermédiaire (Zb à Zd) respective à l'aide de la grandeur de réglage définitive (Sc' à Se') pour la cage de laminoir (3c à 3e) disposée, vue dans la direction de transport (x), respectivement directement en aval.

3. Procédé de fonctionnement selon la revendication 1 ou la revendication 2,
**caractérisé**
- **en ce que** le dispositif de commande (4) détermine la grandeur de réglage définitive (Sc' à Se') respective pour une cage de laminoir (3c à 3e) respective à l'aide de la grandeur de réglage provisoire (Sc à Se) pour la cage de laminoir (3c à 3e) respective et d'une grandeur de correction (Sc" à Se") respective et
- **en ce que** le dispositif de commande (4) détermine la grandeur de correction (Sc" à Se") respective à l'aide de la grandeur de réglage provisoire (Sb à Sd) de la cage de laminoir (3b à 3d) disposée, vue dans la direction de transport (x), respectivement directement en amont.

4. Procédé de fonctionnement selon la revendication 3, **caractérisé**
**en ce que** le dispositif de commande (4) retarde la grandeur de correction (Sc" à Se") respective d'un temps de retard (Tc à Te) respectif par rapport à la grandeur de réglage provisoire (Sb à Sd) de la cage de laminoir (3b à 3d) disposée, vue dans la direction de transport (x), directement en amont.

5. Procédé de fonctionnement selon l'une des revendications précédentes,
**caractérisé**
**en ce que** le dispositif de commande (4) limite les grandeurs de réglage définitives (Sb' à Se') au moyen d'un élément de limitation (18) respectif.

6. Programme de commande, le programme de commande comportant un code de programme (6), lequel est traitable par un dispositif de commande (4) pour un train de laminage (1) avec plusieurs cages de laminoir (3a à 3f), dans lequel le traitement du code de programme (6) s'effectue par le fait que le dispositif de commande (4) commande le train de laminage (1) selon un procédé de fonctionnement selon l'une des revendications précédentes.

7. Dispositif de commande pour un train de laminage (1) pour le laminage d'une matière en laminage (2) en métal, dans lequel le train de laminage (1) comprend plusieurs cages de laminoir (3a à 3f), lesquelles sont traversées successivement par la matière en laminage (2) dans une direction de transport (x) unique pour les cages de laminoir (3a à 3f), de telle sorte que la matière en laminage (2) soit laminée successivement dans les cages de laminoir (3a à 3f),
- le dispositif de commande comprenant des chemins de détermination (9b à 9e), au moyen desquels le dispositif de commande détermine tout d'abord, sur la base d'une grandeur caractéristique (δQ) pour la modification de la section transversale avec laquelle la matière en laminage (2) doit sortir d'une cage de laminoir (3e) déterminée du train de laminage (1), de cette cage de laminoir (3e) et d'un certain nombre de cages de laminoir (3b à 3d) du train de laminage (1) disposées, vues dans la direction de transport (x), en amont de cette cage de laminoir (3e), une grandeur de réglage provisoire (Sb à Se) respective et, à l'aide de la grandeur de réglage provisoire (Sb à Se) respective, une grandeur de réglage définitive (Sb' à Se') respective,
- dans lequel la grandeur de réglage définitive (Sb' à Se') respective influence la section transversale avec laquelle la matière en laminage (2) sort de la cage de laminoir (3b à 3e) respective du train de laminage (1),
- le dispositif de commande commandant les cages de laminoir (3b à 3e) en fonction de la grandeur de réglage définitive (Sb' à Se') respective,
**caractérisé**
- **en ce que** les chemins de détermination (9b à 9d) des cages de laminoir disposées en amont (3b à 3d) comprennent des filtres de fréquence (11b à 11d), au moyen desquels le dispositif de commande détermine la grandeur de réglage provisoire (Sb à Sd) respective pour les cages de laminoir disposées en amont (3b à 3d) par l'intermédiaire d'un filtrage de fréquence respectif de la grandeur caractéristique (δQ) ou d'une grandeur intermédiaire (Zb à Zd) respective déterminée à partir de la grandeur caractéristique (δQ),
- **en ce que** les filtres de fréquence (11b à 11d) sont conçus de telle sorte que, dans la détermination de la grandeur de réglage provisoire (Sb à Sd) respective pour les cages de laminoir disposées en amont (3b à 3d), entrent respectivement seules des composantes de fréquence de la grandeur caractéristique (δQ) qui se situent au-dessous d'une fréquence limite (fb à fd) respective, et
- **en ce que**, par rapport au nombre de cages de laminoir (3b à 3d) du train de laminage (1) disposées, vues dans la direction de transport (x), en amont de la cage de laminoir (3e) déterminée, et vue dans la direction de transport (x), la fréquence limite (fb à fd) d'une cage de laminoir (3b à 3d) à une cage de laminoir (3b à 3d) respectivement reste stationnaire ou augmente et
- **en ce que** le chemin de détermination (9e) pour la cage de laminoir (3e) déterminée est conçu de telle sorte que, dans la détermination de la grandeur de réglage provisoire (Se) pour la cage de laminoir (3e) déterminée, entrent au moins les composantes de fréquence de la grandeur caractéristique (δQ) qui se situent au-dessus de la fréquence limite (fd) de la cage de laminoir (3d) disposée, vue dans la direction de transport (x), directement en amont de la cage de laminoir (3e) déterminée.

8. Dispositif de commande selon la revendication 7, **caractérisé**
- **en ce que** le dispositif de commande fournit au chemin de détermination (9e) pour la cage de laminoir (3e) déterminée du train de laminage (1) la grandeur caractéristique (δQ),
- **en ce que** le dispositif de commande fournit aux chemins de détermination (9b à 9d) pour les cages de laminoir disposées en amont (3b à 3d) la grandeur intermédiaire (Zb à Zd) respective et
- **en ce que** le dispositif de commande comprend des blocs intermédiaires (13c à 13e), au moyen desquels le dispositif de commande détermine pour les cages de laminoir disposées en amont (3b à 3d) la grandeur intermédiaire (Zb à Zd) respective à l'aide de la grandeur de réglage définitive (Sc' à Se') pour la cage de laminoir (3c à 3e) disposée, vue dans la direction de transport (x), respectivement directement en aval.

9. Dispositif de commande selon la revendication 7 ou la revendication 8,
**caractérisé**
- **en ce que** les chemins de détermination (9c à 9e) comprennent des points nodaux (14c à 14e), dans lesquels le dispositif de commande détermine la grandeur de réglage définitive (Sc' à Se') respective par addition de la grandeur de réglage provisoire (Sc à Se) respective pour la cage de laminoir (3c à 3e) respective et d'une grandeur de correction (Sc" à Se") respective, et
- **en ce que** le dispositif de commande comprend des éléments de pontage (15c à 15e), au moyen desquels le dispositif de commande détermine la grandeur de correction (Sc" à Se") respective à l'aide de la grandeur de réglage provisoire (Sb à Sd) de la cage de laminoir (3b à 3d) disposée, vue dans la direction de transport (x), respectivement directement en amont.

10. Dispositif de commande selon la revendication 9, **caractérisé**
**en ce que** les éléments de pontage (15c à 15e) comprennent des organes de retard (17c à 17e), au moyen desquels le dispositif de commande retarde la grandeur de correction (Sc" à Se") respective d'un temps de retard (Tc à Te) respectif par rapport à la grandeur de réglage provisoire (Sb à Sd) de la cage de laminoir (3b à 3d) disposée, vue dans la direction de transport (x), directement en amont.

11. Dispositif de commande selon l'une des revendications 7 à 10, **caractérisé**
**en ce que** les chemins de détermination (9b à 9e) comprennent un élément de limitation (18) respectif, au moyen duquel le dispositif de commande limite la grandeur de réglage définitive (Sb' à Se') respective.

12. Dispositif de commande selon l'une des revendications 7 à 11, **caractérisé**
**en ce que** le dispositif de commande est conçu en tant que dispositif programmable par logiciel.

13. Train de laminage pour une matière en laminage plate (2),
- le train de laminage comprenant plusieurs cages de laminoir (3a à 3f), lesquelles sont traversées successivement par la matière en laminage (2) dans une direction de transport (x) unique pour les cages de laminoir (3a à 3f), de telle sorte que la matière en laminage (2) soit laminée successivement dans les cages de laminoir (3a à 3f),
- le train de laminage comprenant un dispositif de commande (4), par lequel sont commandées les cages de laminoir (3a à 3f) du train de laminage,
**caractérisé**
**en ce que** le dispositif de commande (4) est conçu en tant que dispositif de commande selon l'une des revendications 7 à 12.
